# EUROPÄISCHE PATENTSCHRIFT

(11) **EP 0 849 226 B1**
(45) Veröffentlichungstag und Bekanntmachung des Hinweises auf die Patenterteilung: **17.10.2001**
(21) Anmeldenummer: 97121545.4
(22) Anmeldetag: 08.12.1997
(51) Int. Cl.: C01G 49/06, C09C 1/24

(54) **Verfahren zur Herstellung von Eisenoxidgelbpigmenten und deren Verwendung**
Process for the preparation of yellow iron oxide pigments and its use
Procédé de préparation de pigments d'oxyde de fer jaune et son utilisation

(30) Priorität: 19.12.1996 DE 19652953
(43) Veröffentlichungstag der Anmeldung: 24.06.1998
(73) Patentinhaber: BAYER AG, 51368 Leverkusen (DE)
(72) Erfinder: Braun, Rolf-Michael, Dr., 47802 Krefeld (DE); Bayer, Eckhard, Dr., 47807 Krefeld (DE); Meisen, Ulrich, Dr., 47829 Krefeld (DE)

(56) Entgegenhaltungen:
- EP-A- 0 704 498
- DE-A- 2 508 932
- DATABASE WPI Section Ch, Week 9334 Derwent Publications Ltd., London, GB; Class E31, AN 93-269667 XP002062457 & JP 05 186 225 A (TODA KOGYO CORP) , 27.Juli 1993
- PATENT ABSTRACTS OF JAPAN vol. 017, no. 388 (C-1086), 21.Juli 1993 & JP 05 070146 A (TODA KOGYO CORP), 23.März 1993,

## Beschreibung

Die vorliegende Erfindung betrifft ein Verfahren zur Herstellung von Eisenoxidgelbpigmenten nach dem Fällungsverfahren aus Eisen-(II)-chlorid und einer alkalischen Komponente sowie deren Verwendung.

Das Fällverfahren zur Herstellung von Eisenoxidgelbpigmenten ist seit langem bekannt. Der typische Verlauf dieses Verfahrens ist beispielsweise in Ullmanns Encyclopädie der technischen Chemie Auflage 5, Band A20, Seiten 297 ff. beschrieben. Als Rohstoff wird gewöhnlich Eisen-II-Sulfat, das beim Abbeizen von Stahlblechen anfällt, oder auch Eisen-II-sulfat, das bei der Produktion von Titandioxid nach dem Sulfatverfahren anfällt, verwendet. In der Beizereiindustrie ist seit Jahren ein verstärkter Trend zum Einsatz von Salzsäure als Beizmittel zu beachten. Es fallen also verstärkt Eisen-II-chlorid enthaltende Lösungen an, die möglichst zu einem Wertstoff verarbeitet werden sollen. Ein gängiges Verfahren zur Verwertung ist das sogenannte Sprühröstverfahren, bei dem Eisen-II-chlorid oder Eisen-III-chlorid bei hohen Temperaturen (typischerweise bei mehr als 1000°C) einer oxidativen Hydrolyse unterworfen wird. Als Endprodukte entstehen Eisenoxid, typischerweise Hämatit, und Salzsäure, die als Wertstoff wieder in den Beizereiprozeß eingeschleust wird. Ohne besondere Reinigungsschritte wird bei der oxidativen Hydrolyse ein Eisenoxid erhalten, das zur Herstellung von Hartferriten geeignet ist. Sollen aus derartigen Eisenoxiden Weichferrite hergestellt werden, so muß die Eisenchloridlösung vor der Hydrolyse zusätzlichen Reinigungsschritten unterworfen werden, was das Verfahren insgesamt deutlich verteuert und kompliziert macht. Da jedoch immer mehr Eisenchlorid, großenteils minderer Qualität anfällt, die Aufnahmefähigkeit des Ferritmarkts aber begrenzt ist, wird nach Alternativen zur kostengünstigen Verwertung von Eisenchloriden gesucht. Eine direkte Deponierung oder Verklappung von Eisenchloridlösungen ist aus ökologischen Gründen nicht möglich.

Aus JP-A 05 186 225 ist ein Verfahren zur Herstellung plättchenförmiger Goethite bekannt geworden. Hierbei wird das Amin direkt als Fällungsmittel (mehr als 1,2 Äquivalente bezogen auf Fe) eingesetzt.

JP-A-05 070 146 offenbart ein Verfahren zur Herstellung von Eisenoxidkeimen, in der einer Eisen (II) -Salzlösung 5.30Mol% Akyl- oder Oxyalkylamine, bezogen auf Fe²⁺, Zugesetzt werden.

Aufgabe der vorliegenden Erfindung war es, ein Verfahren zur Verfügung zu stellen, welches es ermöglicht, anfallendes Eisenchlorid kostengünstig in einen hochwertigen Wertstoff umzuwandeln.

Überraschenderweise wurde gefunden, dass man das anfallende Eisen-II-chlorid zur Herstellung von Eisenoxidgelbpigmenten verwerten kann, wenn beim Fällungsprozeß besondere Keime vorliegen.

Gegenstand der Erfindung ist ein Verfahren zur Herstellung von Eisenoxidkeimen für die Herstellung von Eisenoxidgelbpigmenten durch Fällung einer Eisen-II-Verbindung, bevorzugt Eisenhydroxid oder -carbonat, aus einer wäßrigen Eisen-II-chloridlösung mit einer alkalischen Komponente bis zu einem Fällungsgrad von 30 bis 80 % des vorhandenen Eisens und Oxidation der Eisen-II-Verbindung mit einem Oxidationsmittel, welches dadurch gekennzeichnet ist, dass die Eisen-II-chloridlösung aliphatische Amine in einer Menge enthält, so dass 0,05 mg/g FeCl₂ bis 0,5mg FeCl₂ an organischem Kohlenstoff in der Eisen-II-chloridlösung vorliegen.

Eine wäßrige FeCl₂-Lösung, die beispielsweise eine Konzentration von 200g/l an FeCl₂ aufweist, enthält bevorzugt 10 bis 1000 ppm, bezogen auf diese Lösung, an organischem Kohlenstoff, der aus den Aminen stammt.

Als aliphatische Amine können sowohl primäre wie auch sekundäre oder tertiäre Amine eingesetzt werden.

Bevorzugt werden als aliphatische Amine Gemische verschiedener aliphatischer Amine eingesetzt.

Die Gemische bestehen vorzugsweise aus Aminen mit unverzeigten Alkylgruppen, wobei die Alkylgruppen Methyl- bis Decylgruppen sind, und/oder den entsprechenden Alkanolaminen und/oder aus Aminen nativer oder synthetischer Fettsäuren und/oder aus aliphatischen Aminen mit mehreren Aminogruppen.

Das Gemisch besteht vorzugsweise aus einem bis vier aliphatischen Aminen.

Die erfindungsgemäß herstellbaren Keime eignen sich hervorragend dazu, in einem Verfahren zur Herstellung von Eisenoxidgelbpigmenten durch Umsetzung einer Eisen-II-chloridlösung mit einer alkalischen Komponente in Anwesenheit dieser Eisenoxidkeime und Oxidation mit einem Oxidationsmittel eingesetzt zu werden.

Besonders bevorzugt enthält die Eisen-II-chloridlösung aliphatische Amine in einer Menge, so dass 0,05 mg/g FeCl₂ bis 0,5 mg/g FeCl₂ an organischem Kohlenstoff in der Eisen-II-chloridlösung vorliegen.

Durch den Einsatz der aliphatischen Amine bei der Keimherstellung wird überraschenderweise bevorzugt β-FeOOH erhalten, das durch Umwandlung bei höheren Temperaturen unter Zusatz der Eisen-II-chloridlösung und der alkalischen Komponente zu α-FeOOH umgewandelt wird. Man erhält so ein Eisenoxidgelbpigment, das besonders zur Einfärbung von Baustoffen wie Beton, zur Herstellung von Dispersionsfarben oder zur Einfärbung von Kunststoffen und Papier geeignet ist. Bei Einsatz von Eisen-II-chlorid anstelle von Eisen-II-sulfat erhält man außerdem erheblich höhere Raum-Zeit-Ausbeuten.

Die FeCl₂-Lösungen weisen bevorzugt Konzentrationen von 50 bis 500 g/l FeCl₂, besonders bevorzugt 150-350 g/l FeCl₂, auf.

Das Verfahren zur Herstellung von Eisenoxidgelbpigmenten wird besonders bevorzugt folgendermaßen durchgeführt:

### A. Keimherstellung

Zu einer Eisen-II-chloridlösung wird beispielsweise soviel eines Gemisches aus Alkylamin wie z.B. Methylamin, Alkanolamin wie z.B. Diethanolamin, Fettsäureamin wie z.B. Kokosnußfettsäureamin und Polyalkylpolyamin wie z.B. Polyethylenamin gegeben, so dass der Gehalt an organischem Kohlenstoff zwischen 10 und 1000 ppm liegt. Dabei können z.B. die erste Komponente in Mengen von 2 bis 20 Gew.-% und die anderen Komponenten in Mengen von 0 bis 20 Gew.-% vorhanden sein. Der Rest kann aus Wasser und einer oberflächenaktiven Substanz in Mengen von 0,1 bis 2,5 Gew.-% (bevorzugt z.B. ein Fettsäuresulfonat) bestehen. Diese Lösung wird auf die Fälltemperatur erwärmt, wobei vorzugsweise bei 25 bis 50°C gefällt wird.

Die Fällung selbst wird mit einer alkalischen Komponente vorgenommen. Als alkalische Komponente können die Oxide, Carbonate oder Hydroxide der Alkali- oder Erdalkalimetalle, gasförmiges oder wäßriges Ammoniak eingesetzt werden. Typischerweise werden wäßrige Lösungen im Falle der wasserlöslichen Verbindungen oder wäßrige Aufschlämmungen im Falle der schwer löslichen Verbindungen eingesetzt. Die Fällung erfolgt bevorzugt mit einer Fällrate, die 1 bis 10 mol alkalischer Komponente pro Stunde und Mol FeCl₂ entspricht. Es wird in der Regel nicht das gesamte Eisen-II-chlorid ausgefällt, sondern ein Ausfällgrad von 30 bis 80 %, besonders bevorzugt von 40 bis 60 % eingestellt. Nach Beendigung der Fällung wird die gebildete Eisen-II-Komponente (vorzugsweise Eisen-II-hydroxid oder Eisen-II-carbonat) mit einem Oxidationsmittel oxidiert. Als Oxidationsmittel können H₂O₂, Nitrate, Hypochlorite, Chlorite, Chlorate oder Perchlorate, Sauerstoff, Ozon oder Luft verwendet werden. Eine besonders bevorzugte Ausführungsform ist die Verwendung von Luftsauerstoff. Das Ende der Oxidation ist an einem drastischen Abfall des pH-Werts der Suspension erkennbar. Der entstandene Keim, der je nach Herstellbedingungen aus α-FeOOH und β-FeOOH besteht, wird vorzugsweise nicht isoliert, sondern mit dem gesamten noch enthaltenen, nicht umgesetzten Eisen-II-chlorid zur Pigmentbildung eingesetzt. Die Reaktion kann in verschiedenen Apparaten vorgenommen werden. Bevorzugt wird ein diskontinuierlicher Rührkessel. Bei Herstellung sehr großer Mengen kann auch eine Rührkesselkaskade eingesetzt werden. Die Durchmischung der alkalischen Komponente mit der Eisen-II-chloridlösung kann auch im Bypass mittels statischer Mischer oder anderer Mischorgane oder auch in rotierenden Pumpen erfolgen. Die Zugabe der alkalischen Komponente und die Zugabe der Oxidationsmittel kann ebenfalls im Bypass erfolgen, wobei obengenannte Mischprinzipien angewendet werden können.

### B. Pigmentherstellung

Zu dem oben beschriebenen Keim wird vorzugsweise eine Menge Eisen-II-chlorid gegeben, die der 3 bis 40-fachen molaren Menge an Eisen des gesamten Keims (also Eisenoxidhydroxid und nicht umgesetztes FeCl₂) entspricht. Diese Suspension wird unter Rühren auf eine Temperatur zwischen 60 und 85°C gebracht und nach Erreichen dieser Temperatur mit einem der unter A. bereits genannten Oxidationsmittel oxidiert. Gleichzeitig wird der pH-Wert durch Zugabe einer alkalischen Komponente (z.B.: Hydroxide oder Carbonate der Alkali- oder Erdalkalimetalle oder NH₃) mit einer Geschwindigkeit von 0,01 bis 0,4 pH/Stunde auf einen End-pH-Wert von 3,0 bis 5,0 gesteigert. Die Oxidationsgeschwindigkeit, die von der Zugabegeschwindigkeit des Oxidationsmittels, der Temperatur, der Durchmischung im Behälter und vom pH-Wert abhängt, sollte bevorzugt zwischen 0,5 und 10 mol-% Eisen-II-Salz pro Stunde liegen. Liegt die Oxidationsgeschwindigkeit wesentlich unter dem unteren Grenzwert, so wird das Verfahren unwirtschaftlich; liegt die Oxidationsgeschwindigkeit sehr deutlich über dem oberen Grenzwert, so wird ein unerwünscht rotstichiges Eisenoxidpigment erhalten. Die Oxidation ist beendet, sobald der Fe-II-Gehalt der Suspension kleiner als 3 mol-% ist. Eine weitergehende Oxidation bis zu 100 % Umsetzung ist wirtschaftlich weniger sinnvoll, kann aber durchaus durchgeführt werden. Die Umsetzung des Keims zum Pigment kann in der Regel in den zur Keimherstellung verwendeten Reaktoren erfolgen.

Steht nicht genügend Eisen-II-chlorid zur Verfügung, so kann das Eisen-II-chlorid sowohl bei der Keimherstellung als auch bei der Pigmentherstellung teilweise durch Eisen-II-sulfat ersetzt werden. Die bevorzugte Ausführungsform ist jedoch der Einsatz von Eisen-II-chlorid.

Durch geeignete Variation der angegebenen Herstellungsbedingungen kann eine breite Palette von Eisenoxidgelbpigmenten verschiedener Teilchengröße und somit verschiedener Farbtöne hergestellt werden.

Die Aufarbeitung der Pigmentsuspension erfolgt durch die bekannten Schritte Filtration, Trocknung und Mahlung.

Das erhaltene Eisenoxidgelbpigment ist besonders für die Einfärbung von Beton geeignet. Darüber hinaus kann es auch zur Einfärbung von Kunststoffen, Papier oder zur Herstellung von Dispersionsfarben oder Lacken und Farben eingesetzt werden.

Die Erfindung soll anhand nachfolgender Beispiele näher erläutert werden.

### Beispiele

### I. Keimherstellung

In einem Rührkessel mit einer Begasungseinrichtung zur Begasung mit Luftsauerstoff werden zu 600 Litern wäßriger Eisen-II-chloridlösung mit einem Gehalt von 320 g/l FeCl₂ 0,29 Liter eines wäßrigen Gemisches bestehend aus 5 Gew.-% Polyethylenpolyamin [CAS-No. 68603-67-68], 2,5 Gew.-% Kokosnußfettsäureamin [CAS-No. 61791-14-8], 8 Gew.-% Methylamin und 0,7 Gew.-% Lauryldodecylsulfonat gegeben.

Das Gemisch ergibt einen organischen Kohlenstoffgehalt von 65 ppm in der Eisen-II-chloridlösung.

Die Lösung wird unter Rühren auf 34°C aufgeheizt. 162 1 Natronlauge mit 300 g/l NaOH werden in 44 Minuten zugepumpt. Nach Beendigung des Fällvorgangs wird mit 3,5 Nm³/h Luft begast. Der pH-Wert liegt nach der Fällung bei 6,3 und fällt zum Ende der Reaktion auf 2,8. Die Reaktionszeit beträgt 320 Minuten. Das Reaktionsprodukt besteht zu 80 % aus β-FeOOH und zu 20 % aus α-FeOOH. Die Phasenanteile wurden durch Röntgenpulverdiffraktometrie ermittelt. Dieser Keim wurde unmittelbar ohne jegliche weitere Aufarbeitung zur Pigmentherstellung eingesetzt.

### II. Pigmentherstellung

In einem Rührkessel mit Begasungseinrichtung und pH-Regelung und einer Vorrichtung zur Begasung mit Luft werden 53 1 des Keims aus I. eingefüllt. Zu dieser Keimsuspension werden 128 1 einer Eisen-II-chloridlösung (wie unter I.) gepumpt. Dann wird Natronlauge mit einer Konzentration von 300 g/l mit einer derartigen Geschwindigkeit zugegeben, dass der pH-Wert der Suspension um 0,2 Einheiten pro Stunde ansteigt. Gleichzeitig wird mit 320 Luft pro Stunde oxidiert. Die pH-Wertsteigerung wird bei Erreichen eines pH-Wertes von 3,65 beendet. Dieser pH-Wert wird mit Natronlauge konstant gehalten. Die Begasung wird aufrechterhalten. Die Reaktion ist beendet, wenn der Fe-II-Gehalt kleiner als 3 mol-% ist.

Das erhaltene Eisenoxidgelbpigment wird filtriert, mit Wasser gewaschen und sprühgetrocknet. Dieses Produkt ist unmittelbar zum Einsatz in der Bauindustrie geeignet. Für andere Verwendungszwecke ist es angebracht eine intensive Mahlung vorzunehmen.

Das Produkt hat ähnlich gute Eigenschaften (Farbstärke, Farbton etc.) wie die bekannten, nach dem Fällverfahren mit FeSO₄-Lösung hergestellten Produkte (z.B. Bayferrox ® 920, Bayer AG, Leverkusen, DE).

## Patentansprüche

1. Verfahren zur Herstellung von Eisenoxidkeimen durch Fällung einer Eisen-II-Verbindung aus einer wäßrigen Eisen-II-chloridlösung mit einer alkalischen Komponente bis zu einem Fällungsgrad von 30 - 80 % des vorhandenen Eisens und Oxidation der Eisen-II-Verbindung mit einem Oxidationsmittel, **dadurch gekennzeichnet, dass** die Eisen-II-chloridlösung aliphatische Amine in einer Menge enthält, so dass 0,05 mg/g FeCl₂ bis 0,5 mg/g FeCl₂ an organischem Kohlenstoff in der Eisen-II-chloridlösung vorliegen.

2. Verfahren gemäß Anspruch 1, **dadurch gekennzeichnet, dass** als aliphatische Amine ein Gemisch verschiedener aliphatischer Amine eingesetzt wird.

3. Verfahren gemäß Ansprüchen 1 und 2, **dadurch gekennzeichnet, dass** das Gemisch aus Aminen mit unverzeigten Alkylgruppen, wobei die Alkylgruppen aus Methyl- bis Decylgruppen bestehen, und/oder den entsprechenden Alkanolaminen und/oder aus Aminen nativer oder synthetischer Fettsäuren und/oder aus aliphatischen Aminen mit mehreren Aminogruppen besteht.

4. Verfahren gemäß einem oder mehreren der Ansprüche 1 bis 3, **dadurch gekennzeichnet, dass** im Gemisch mindestens 1 bis höchstens 4 aliphatische Amine vorliegen.

5. Verwendung der nach den Ansprüchen 1 bis 4 hergestellten Eisenoxidkeime zur Herstellung von Eisenoxidgelbpigmenten.

## Claims

1. Process for producing iron oxide nuclei by precipitation of an iron (II) compound from an aqueous iron(II) chloride solution by means of an alkaline component until 30% to 80% of the iron present is precipitated, and oxidation of the iron(II) compound by means of an oxidising agent, **characterised in that** the iron(II) chloride solution contains aliphatic amines in a quantity such that 0.05 mg/g FeCl₂ to 0.5 mg/g FeCl₂ of organic carbon is present in the iron(II) chloride solution.

2. Process according to claim 1, **characterised in that** the aliphatic amines used are a mixture of different aliphatic amines.

3. Process according to claims 1 and 2, **characterised in that** the mixture consists of amines having unbranched alkyl groups, the alkyl groups comprising methyl to decyl groups, and/or of the corresponding alkanolamines and/or of amines of naturally occurring or synthetic fatty acids and/or of aliphatic amines having several amino groups.

4. Process according to one or more of claims 1 to 3, **characterised in that** at least 1 and at most 4 aliphatic amines are present in the mixture.

5. Use of the iron oxide nuclei produced according to claims 1 to 4 for the preparation of yellow iron oxide pigments.

## Revendications

1. Procédé pour la préparation de germes d'oxyde de fer par précipitation d'un composé de fer II à partir d'une solution aqueuse de chlorure de fer II avec un constituant alcalin jusqu'à un degré de précipitation de 30 - 80 % du fer présent et par oxydation du composé de fer II avec un agent d'oxydation, **caractérisé en ce que** la solution de chlorure de fer II contient des amines aliphatiques dans une quantité telle que de 0,05 mg/g de FeCl₂ à 0,5 mg/g de FeCl₂ de carbone organique sont présents dans la solution de chlorure de fer II.

2. Procédé selon la revendication 1, **caractérisé en ce que** l'on utilise comme amines aliphatiques un mélange de différentes amines aliphatiques.

3. Procédé selon les revendications 1 et 2, **caractérisé en ce que** le mélange est constitué d'amines avec des groupes alkyle non ramifiés, les groupes alkyle étant des groupes méthyle à décyle, et/ou d'alcanolamines correspondantes et/ou d'amines d'acides gras natifs ou synthétiques et/ou d'amines aliphatiques présentant plusieurs groupes amino.

4. Procédé selon l'une ou plusieurs quelconques des revendications 1 à 3, **caractérisé en ce que** d'au moins 1 à au plus 4 amines aliphatiques sont présentes dans le mélange.

5. Utilisation des germes d'oxyde de fer préparés selon les revendications 1 à 4 pour la préparation de pigments jaunes d'oxyde de fer.
